# EUROPÄISCHE PATENTANMELDUNG

(11) **EP 3 045 995 A1**
(43) Veröffentlichungstag der Anmeldung: **20.07.2016**
(21) Anmeldenummer: 15201542.6
(22) Anmeldetag: 21.12.2015
(51) Int. Cl.: G05B 19/423, B25J 9/16

(54) **EINMESSVERFAHREN AUS KOMBINATION VON VORPOSITIONIERUNG UND HANDFÜHREN**

(30) Priorität: 13.01.2015 DE 102015200319
(71) Anmelder: KUKA Systems GmbH, 86165 Augsburg (DE)
(72) Erfinder: HONSBERG, Otmar, 82256 Fürstenfeldbruck (DE); HECKL, Christina, 86405 Meitingen (DE)
(74) Vertreter: Mader, Joachim

(57) **Zusammenfassung**

Die vorliegende Erfindung betrifft ein Verfahren zum Steuern eines Roboters, und insbesondere die Verwendung des Verfahrens zum Einmessen eines Roboters. Das Verfahren weist dabei ein Annähern an und Anfahren von zumindest einem Einmesspunkt auf, dessen Koordinaten anschließend erfasst werden. Somit ist es vorteilhaft möglich einen schnellen Einmessvorgang aufgrund einer einfachen Bedienung durzuführen.

## Beschreibung

### 1. Technischer Bereich

Die vorliegende Erfindung betrifft ein Verfahren zum Steuern eines Roboters, und ferner die Verwendung des Verfahrens zum Einmessen eines Roboters.

### 2. Technischer Hintergrund

Ein Roboter ist eine universell einsetzbare Bewegungsmaschine mit mehreren Achsen. Die Bewegungen der Achsen sind dabei frei programmierbar und können gegebenenfalls auch sensorgeführt sein. Bevor ein Roboter eingesetzt werden kann um beispielsweise ein Werkstück zu bearbeiten, muss üblicherweise der Roboter eingemessen werden, also beispielsweise ein Bezug zwischen dem Koordinatensystem des Roboters (Roboter-Koordinatensystem oder Roboterfuß-Koordinatensystem) und einem Koordinatensystem der Umgebung hergestellt werden. Mittels des Einmessens kann somit durch den Roboter bzw. die Robotersteuerung die relative Lage zwischen dem Roboter und seiner Umgebung oder auch dem Werkstück bestimmt werden. Ein derartiges Einmessen ist notwendig, damit die Robotersteuerung die erforderlichen Daten erhält, wo sich das Werkstück befindet und dieses somit entsprechend bearbeitet werden kann.

Das Einmessen des Roboters kann beispielsweise notwendig sein, wenn ein Roboter neu positioniert wird bzw. in eine neue Umgebung gebracht wird, oder auch wenn ein neues Werkstück durch den Roboter bearbeitet werden soll. Insbesondere wenn eine ortsflexible Robotereinheit häufig die Position wechselt oder eine feste Robotereinheit häufig wechselnde Werkstücke bearbeiten soll, ist ein oftmaliges (Neu-)Einmessen notwendig. Um einen zügigen Positionswechsel oder Wechsel der Werkstückarten durchführen zu können, ist ein schnelles Verfahren zum Einmessen wünschenswert.

Aus dem Dokument DE 100 03 611 A1 ist ein Verfahren zum Einmessen eines Roboters bekannt. Mit diesem Verfahren werden mindestens drei Referenzmarken mit einer relativ zu der Roboterbasis kalibrierten Messspitze angefahren und anschließend die Koordinaten des Roboters bestimmt. Allerdings müssen hierfür die absoluten Koordinaten der Referenzmarken bekannt sein. Ferner setzt dieses Verfahren auch gesteigerte Kenntnisse der Roboterbedienung voraus, um die Referenzmarken präzise anzufahren.

In dem Dokument DE 10 2006 035 070 A1 wird ein Koordinatenmessgerät offenbart, mit welchem 3D-Koordinaten eines Werkstücks gemessen werden können. Dieses Messgerät weist einen Messtaster und mehrere Seilzug-Wegaufnehmer auf, wobei letztere den Messtaster mit einer gerätefesten Platte verbinden. Basierend auf Seillängen werden dann die 3D-Koordinaten eines angefahrenen Punktes berechnet. Diese Konstruktion ist relativ aufwendig und erfordert ebenfalls gesteigerte Basiskenntnisse in der Roboterbedienung.

Der vorliegenden Erfindung liegt somit die Aufgabe zugrunde, ein einfaches und effizientes Einmessen eines Roboters zu einem Werkstück oder zu einer Umgebung zu ermöglichen. Es ist insbesondere eine Aufgabe der vorliegenden Erfindung eine Methode bereitzustellen, mit der ein ortsflexibler Roboter schnell in neue Umgebungen eingemessen werden kann. Eine weitere Aufgabe der vorliegenden Erfindung ist es eine Methode bereitzustellen, mit der ein schnelles Einmessen eines Roboters bei häufig wechselnden Werkstücken möglich ist.

Diese und weitere Aufgaben, welche beim Lesen der folgenden Beschreibung der Erfindung ersichtlich werden, werden durch den Gegenstand der Haupt- und Nebenansprüche gelöst.

### 3. Inhalt der Erfindung

Die Erfindung betrifft ein Verfahren zum Steuern eines Roboters, und insbesondere zum Steuern eines portablen Roboters. Vorzugsweise umfasst die Erfindung dabei die Verwendung des erfindungsgemäßen Verfahrens zum Einmessen eines Roboters. Der Roboter kann dabei beispielsweise ein mehrachsiger Gelenkarmroboter sein, an dessen Flansch ein Werkzeug oder Endeffektor angebracht sein kann. Vorzugsweise befindet sich an dem Roboterflansch oder an dem Werkzeug vorteilhaft eine Messspitze, deren Eigenschaften bzw. Ausmaße einer Robotersteuerung bereitgestellt sind. Besonders bevorzugt ist die Messspitze MRK-fähig ausgeführt, so dass ein sicherer Einsatz in einer Mensch-Roboter-Kollaboration (MRK) möglich ist.

Das erfindungsgemäße Verfahren weist dabei ein automatisches Annähern an zumindest einen Einmesspunkt basierend auf einer Bahnplanung des Roboters auf. Bei diesem automatischen Annähern verringert sich eine räumliche Distanz zwischen dem Roboter bzw. dem Flansch / dem Werkzeug / der Messspitze und dem Einmesspunkt, ohne dass ein manuelles Bewegen des Roboters durch einen Bediener stattfindet. Das Annähern kann somit beispielsweise entsprechend einer Programmierung oder eines Programms des Roboters erfolgen. Ein tatsächliches Erreichen des Einmesspunktes findet dabei allerdings nicht statt.

Weiterhin umfasst das Verfahren nach jedem automatischen Annähern ein manuelles Anfahren des Einmesspunktes und ein Erfassen von Koordinaten des manuell angefahrenen Einmesspunktes. Somit wird, nachdem sich der Roboter automatisch einem Einmesspunkt angenähert hat, dieser Einmesspunkt manuell angefahren. Im Gegensatz zum Annähern wird der Einmesspunkt somit tatsächlich erreicht, und im Gegensatz zum automatischen Modus wird beim manuellen Betrieb der Roboter durch den Bediener gesteuert.

Der Begriff "Einmesspunkt" kann dabei einen bestimmten Punkt in der Umgebung des Roboters oder im Arbeitsraum des Roboters umfassen, oder sich auch auf einen bestimmten Punkt an einem Werkstück oder an der Oberfläche eines Werkstücks beziehen. Der Fachmann versteht dabei die Einmesspunkte vorteilhaft so zu wählen, dass diese sich im Sinne der vorliegenden Erfindung zum Einmessen des Roboters eignen. Vorzugsweise sind die Einmesspunkte mit eindeutigen Merkmalen der Umgebung bzw. des Werkstücks verknüpft. So können die Einmesspunkte beispielsweise eine Bohrung, ein Konus oder eine Ecke umfassen. Ferner können die Einmesspunkte vorzugsweise so gewählt sein, dass sich mit ihnen ein geeignetes Koordinatensystem aufspannen lässt.

Vorzugsweise ist das automatische Annähern ein automatisches Annähern des Roboters an den zumindest einen Einmesspunkt. Die Bewegungen (Annähern oder Anfahren) des Roboters werden hierin also als eine Bewegungen des Flansches / des Werkzeugs / der Messspitze bzw. des Werkzeugmittelpunktes (engl.: tool center point, TCP) verstanden, und werden im Folgenden als Bewegungen des Roboters oder Bewegungen des TCPs bezeichnet. Vorzugsweise ändert sich in Folge des automatischen Annäherns die Pose des Roboters. Weiter vorzugsweise ändert sich die Pose des Roboters auch in Folge des manuellen Anfahrens des Einmesspunktes. Vorzugsweise umfasst das automatische Ansteuern ein Ansteuern der Roboterkinematik basierend auf der Bahnplanung des Roboters. Der Roboter bzw. die Antriebe der Roboterkinematik werden aktiv durch beispielsweise die Robotersteuerung angesteuert bzw. geregelt um das automatische Ansteuern des Einmesspunktes durchzuführen.

Bei dem erfindungsgemäßen Verfahren findet somit eine Vorpositionierung des Roboters statt, welche automatisch abläuft. Da die Annäherung an den Einmesspunkt komplexe Bewegungen des Roboters erfordern kann, können diese bestmöglich durch den automatischen Betrieb realisiert werden. Ein mühsames manuelles Führen des Roboters über weite Strecken ist daher nicht erforderlich. Somit bewegt sich der Router automatisch in eine Einmesszone, welche vorzugsweise einen relativ engen Bereich beschreibt, in welchem sich der Einmesspunkt befindet. Das letztendliche Erreichen bzw. Anfahren des Einmesspunktes geschieht dann manuell. Da hierfür nur kleine Wegstrecken zurückgelegt werden müssen, ist nur eine geringe Bedien- bzw. Steuerkompetenz des Bedieners notwendig.

Vorzugsweise umfasst das manuelle Anfahren ein handgeführtes Bewegen des Roboters, z.B. mittels eines Bedienpanels oder eines Joysticks o.ä. Noch mehr bevorzugt umfasst das manuelle Anfahren jedoch ein unmittelbares (direktes) Führen des Roboters von Hand. Der Roboter wird also direkt von einem Bediener gepackt und geführt. Durch diese intuitive und einfache Bedienung kann der Einmesspunkt sehr schnell und präzise erreicht werden. Vorzugsweise umfasst das manuelle Anfahren einen Betrieb des Roboters in einem Betriebsmodus mit Nachgiebigkeitsregelung (Impedanzregelung) und insbesondere mit aktiver Nachgiebigkeitsregelung. Aktive Nachgiebigkeitsregelung bezeichnet z.B. die Regelung des Manipulators aufgrund einer Abweichung des Endeffektors. Dies eignet sich insbesondere zum Führen von Robotern durch einen Operator zum Beispiel im Rahmen eines Teach-In-Vorgangs, da diese Regelung einen für den Nutzer sehr sichereren Betrieb erlaubt. Dabei wird vorzugsweise auch der Einfluss der Gravitation kompensiert, so dass der Roboter in diesem Betriebsmodus seine momentane Pose hält, wenn er nicht bewegt bzw. geführt wird. Dies vereinfacht die Bedienung.

Vorzugsweise umfasst der Roboter mehrere Achsen. Weiter vorzugsweise sind Sensoren zur Erfassung der an den Achsen wirkenden Kräfte und/oder Drehmomente vorgesehen. Im weitesten Sinne gehören hierzu auch Mittel, mit denen beispielsweise die Motorströme der Antriebe des Roboters gemessen werden können, um hierüber indirekt die an den Achsen wirkenden Kräfte und Momente zu bestimmen. Besonders bevorzugt sind diese Sensoren jedoch als Drehmomentsensoren, bspw. auf der Basis von Dehnungsmessstreifen, ausgeführt und in den Gelenken des Roboters bereitgestellt. Basierend auf den erfassten Kräften bzw. erfassten Drehmomenten kann eine Führungsbewegung (bspw. durch eine direkte Handführung des Bedieners) erkannt werden und hierauf entsprechend reagiert werden, wodurch die handgeführte Bewegung bzw. das manuelle Anfahren ohne den Einsatz externer Bedienkonsolen oder Bedienpanels ermöglicht wird.

Vorzugsweise umfasst das automatische Annähern ein automatisches Annähern an zumindest zwei, weiter vorzugsweise an zumindest drei und weiter vorzugsweise an genau drei Einmesspunkte. Der Fachmann versteht, dass für jeden dieser Einmesspunkte einzeln das automatische Annähern, manuelle Anfahren und Erfassen von Koordinaten erfolgt. Der Fachmann versteht ferner, dass die verschiedenen Einmesspunkte vorteilhaft nicht identisch sind. Durch das Vermessen mehrerer Einmesspunkte kann die Bestimmtheit und Genauigkeit des Einmessverfahrens erhöht werden. Durch das Vermessen von drei Einmesspunkten lässt sich insbesondere präzise ein Koordinatensystem aufspannen. Hierzu werden bevorzugt der Ursprung und zwei weitere Punkte der neuen Basis bzw. des neuen Koordinatensystems vermessen. Es muss also nur eine geringe Anzahl von Messpunkten vermessen werden um den Roboter einzumessen.

Vorzugsweise weist das erfindungsgemäße Verfahren weiterhin ein Berechnen eines Koordinatensystems basierend auf den erfassten Koordinaten der Einmesspunkte auf. Insbesondere bevorzugt wird dabei ein Basis-Koordinatensystem basierend auf den erfassten Koordinaten berechnet. Auf Grundlage dieses Koordinatensystems können im weiteren Verlauf alle weiteren Punkte, die zur Programmierung eines Prozesses notwendig sind, relativ zu dem Koordinatensystem angegeben und gespeichert werden.

Vorzugsweise wird zum automatischen Anfahren des Einmesspunktes kein Suchalgorithmus angewendet. Die automatische Vorpositionierung des Roboters kann somit ohne großen Aufwand erfolgen, so dass der Roboter bzw. der TCP schnell in die nähere Umgebung des Einmesspunktes bewegt wird. Anstatt einen aufwendigen Suchalgorithmus anzuwenden wird das präzise Einmessen selbst mittels intuitivem Handführen durch den Bediener vorgenommen.

Vorzugsweise wird das Verfahren zum Steuern eines Roboters während des Ablaufs eines Roboterprogramms durchgeführt. Das erfindungsgemäße Verfahren ist somit als Teilschritt eines Prozesses im Automatikmodus ausführbar; der Prozess im Automatikmodus muss also nicht unterbrochen werden um den Roboter einzumessen.

Vorzugsweise umfasst das automatische Anfahren ein Anfahren des Einmesspunktes bis auf einen räumlichen Abstand von 1 - 30 cm, weiter vorzugsweise von 1 - 20 cm, und weiter vorzugsweise von 1 - 10 cm. Durch das automatische Anfahren wird der Roboter somit in die unmittelbare Umgebung des Einmesspunktes bewegt. Es ist also keine große Bedienkompetenz bzw. Steuerkompetenz eines Bedieners notwendig, um anschließend den Einmesspunkt manuell anzufahren.

Weiterhin betrifft die Erfindung ein Robotersystem, aufweisend einen Roboter und insbesondere einen mehrachsigen Gelenksarmroboter. Ferner weist das Robotersystem eine Robotersteuerung auf, wobei die Robotersteuerung eingerichtet ist Schritte zum Steuern des Roboters gemäß dem erfindungsgemäßen Verfahren auszuführen. Insbesondere ist die Robotersteuerung eingerichtet ein automatisches Annähern an zumindest einen Einmesspunkt basierend auf einer Bahnplanung des Roboters durchzuführen, und nach jedem automatischen Annähern ein manuelles Anfahren des Einmesspunktes zu erlauben, und anschließend die Koordinaten des manuell angefahrenen Einmesspunktes zu erfassen. Vorzugsweise umfasst der Roboter zudem einen oder mehrere Sensoren zur Erfassung der an den Achsen wirkenden Kräfte und/oder Drehmomente. Der Sensor bzw. die Sensoren können hierfür an entsprechenden Stellen des Manipulators beziehungsweise Roboterarms bereitgestellt sein. Bevorzugt kann auch ein 6D-Kraft/Drehmomentsensor beispielsweise am oder im Roboterfuß bereitgestellt sein.

Vorzugsweise ist der Roboter bzw. das Robotersystem ortsflexibel und/oder portabel. Der Roboter bzw. das Robotersystem sind also nicht ortsfest installiert, sondern können beispielsweise variabel an verschiedenen Bearbeitungsstationen eingesetzt werden.

### 4. Ausführungsbeispiele

Im Folgenden wird die Erfindung anhand der beiliegenden Figuren näher erläutert. Dabei zeigen:
Fig. 1 ein erfindungsgemäßes Robotersystem, und
Fig. 2 den schematischen Ablauf eines erfindungsgemäßen Verfahrens.

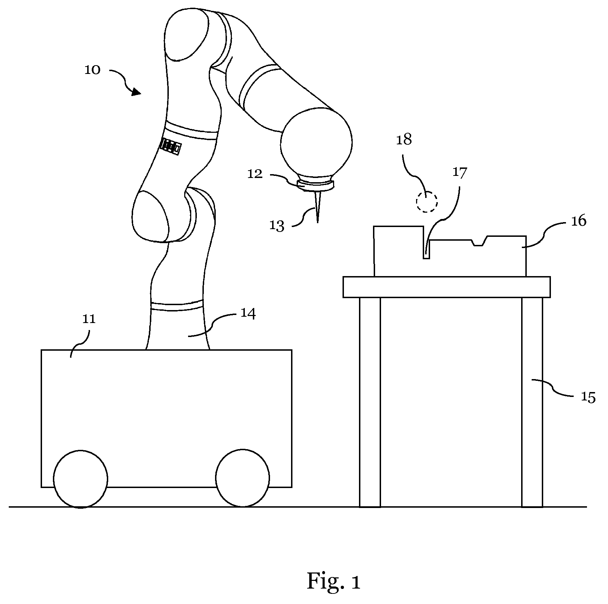

In Fig. 1 ist beispielhaft ein Robotersystem dargestellt, umfassend einem Roboter 10. Dieser Roboter 10 ist hier in Form eines mehrachsigen Gelenkarmroboters 10 ausgebildet. Bei dem beispielhaft dargestellten Roboter 10 handelt es sich um einen Leichtbauroboter des Typs KUKA LBR iiwa, welcher sieben Gelenke umfasst, die unabhängig voneinander bewegt werden können. Somit weist der dargestellte Roboter 10 sieben Drehachsen auf, welche komplexe Bewegungen des Roboters 10 ermöglichen. In den Gelenken des Roboters 10 sind vorteilhaft Kraft- und/oder Drehmomentsensoren bereitgestellt, mit denen auf den Roboter 10 wirkende Kräfte und/oder Drehmomente erfasst werden können.

Der Roboter 10 ist mittels einem Fuß 14 auf einer ortsflexiblen Einheit 11 installiert ist. Die ortsflexible Einheit 11, wie etwa ein geeigneter Wagen, kann zu verschiedenen Positionen bewegt werden, beispielsweise zu verschiedenen Bearbeitungsstationen in einer industriellen Fertigung. Da der Roboter 10 mit der ortsflexiblen Einheit 11 verbunden ist, ist folglich auch der Roboter 10 als ortsflexibel zu betrachten.

Der Roboter 10 weist an seinem Flansch 12 eine Messspitze 13 auf, welche verwendet werden kann um den Roboter beispielsweise an einem Werkstück einzumessen. Der Fachmann versteht, dass die Messspitze 13 trennbar mit dem Flansch 12 verbunden sein kann, oder dass ein Endeffektor an den Flansch 12 gekoppelt sein kann, welcher wiederum eine Messspitze führt.

In Fig. 1 ist ferner ein Werktisch 15 dargestellt, auf welchem sich ein Werkstück 16 befindet, welches wiederum von dem Roboter 10 bearbeitet werden soll. Hierzu muss der Roboter 10 zuerst eingemessen werden. Zum Beispiel soll hier der Roboter 10 bezüglich der Aussparung 17 des Werkstücks 16 eingemessen werden. Da die Position des Roboters 10 bzw. der ortsflexiblen Einheit 11 nicht exakt eingestellt werden kann, wird durch das Einmessen die exakte Position der Aussparung 17 in Bezug zu den Roboterkoordinaten der Robotersteuerung bereitgestellt.

Alternativ können andere Werkstückmerkmale und/oder Werkstückpositionen angefahren werden.

Ein automatisches Finden der Aussparung 17 durch den Roboter 10 ist aufwendig, da hierfür ein Suchalgorithmus angewendet werden muss. Aufgrund einer vorgegebenen Bahnplanung ist die ungefähre Position der Aussparung 17 dem Roboter 10 bzw. der Robotersteuerung allerdings bekannt. Mittels des erfindungsgemäßen Verfahrens nähert sich der Roboter 10 bzw. die Messspitze 13 somit zunächst automatisch der Aussparung 17 an, und erreicht beispielsweise die Stelle 18, welche hier als Vorposition 18 bezeichnet wird.

Nach diesem automatischen Annähern wird die Aussparung 17 manuell angefahren. Hierzu wird der Roboter 10 an seinem Flansch 12 ergriffen und per Hand geführt. Am Flansch kann hierfür ein Betätigungsschalter vorgesehen sein, der vom Bediener gedrückt werden muss, um den Handbetrieb des Roboters freizuschalten. Der Bediener führt den Roboter am Flansch, so dass die Messspitze 13 von der Vorposition 18 zur Aussparung 17 bewegt wird. Aufgrund der Kraft- und/oder Drehmomentsensoren kann der Roboter diese Handführung des Bedieners erkennen und die Antriebe in den Gelenken entsprechend ansteuern, so dass sich die Pose des Roboters 10 verändert und sich die Messspitze 13 entsprechend bewegt. Anschließend werden in der Robotersteuerung die exakten Koordinaten (in Bezug auf das Roboter-Koordinatensystem) der Messspitze 13, welche sich in der Aussparung 17 befindet, ermittelt und gespeichert. Basierend auf diesen Koordinaten kann das Werkstück nun im normalen Arbeitsbetrieb von dem Roboter zur Bearbeitung angefahren werden.

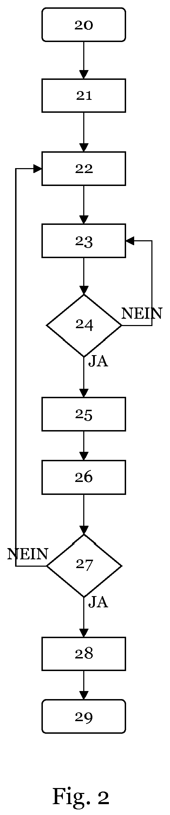

In Fig. 2 ist schematisch der Ablauf eines erfindungsgemäßen Verfahrens zum Steuern eines Roboters dargestellt. Das Verfahren beginnt in Schritt 20. In Schritt 21 wird durch den Bediener das Einmessen des Roboters eingeleitet. Hierzu wird eine entsprechende Messspitze am Roboterflansch oder an einem Endeffektor des Roboters befestigt und als TCP eingemessen. In Schritt 22 fährt der Roboter derart, dass sich der TCP des Roboters einem ersten Einmesspunkt annähert. Dieses Annähern erfolgt dabei automatisch basierend auf der Bahnplanung. Der Roboter wird also derart programmiert, dass er sich mit der Messspitze in die nähere Umgebung zu dem Einmesspunkt bewegt.

Im folgenden Schritt 23 wird das Handführen des Roboters ermöglicht. Nun führt der Werker beziehungsweise der Bediener die Messspitze an den definierten Einmesspunkt. Der Roboter erkennt die Führ-Bewegung und passt seine Pose bzw. seine Struktur entsprechend an, so dass er der Führung folgen kann.

Bei der Entscheidung bzw. Überprüfung 24 wird überprüft, ob der Einmesspunkt erreicht wurde. Das Erreichen des Einmesspunktes kann beispielsweise durch den Bediener der Steuerung mitgeteilt werden, beispielsweise durch Betätigen eines Zustimmschalters. Wenn bei der Entscheidung 24 festgestellt wurde, dass der Einmesspunkt erreicht wurde, werden im Schritt 25 die Koordinaten des erreichten Punktes bzw. des TCP gespeichert. Anschließend wird in Schritt 26 der Betriebsmodus des Handführens beendet.

Bei der Entscheidung bzw. Überprüfung 27 wird festgestellt, ob bereits alle Einmesspunkte vermessen wurden bzw. die entsprechenden Koordinaten hierzu erfasst wurden. Wenn dies nicht der Fall ist, wird das Verfahren in Schritt 22 für den nächsten, also hier für den zweiten Einmesspunkt fortgesetzt. Der Roboter nähert sich also automatisch dem zweiten Einmesspunkt an, basierend auf der Bahnplanung des Roboters. Anschließend wird in Schritt 23 der Betriebsmodus des Handführens aktiviert, und der zweite Einmesspunkt manuell angefahren. Nach Erreichen des zweiten Einmesspunktes werden die Koordinaten in Schritt 25 gespeichert usw., bis alle gewünschten bzw. benötigten Einmesspunkte erfasst sind.

Wenn bei der Entscheidung 27 festgestellt wird, dass z.B. drei Einmesspunkte vermessen wurden, wird in Schritt 28 ein Koordinatensystem zu den drei gespeicherten Einmesspunkten berechnet. Da vorzugsweise durch die drei Einmesspunkte der Ursprung und zwei weitere Punkte der neuen Basis gegeben sind, kann ein entsprechendes Basis-Koordinatensystem einfach berechnet werden.

Das beschriebene Verfahren kann somit eingesetzt werden, um ein zügiges Wechseln von Werkstücken oder Roboterpositionen zu ermöglichen, da das Einmessen des Roboters schnell und intuitiv erfolgt.

### Bezugszeichenliste:

- 10: Roboter
- 11: ortsflexible Einheit
- 12: Roboterflansch
- 13: Messspitze
- 14: Roboterfuß
- 15: Werktisch
- 16: Werkstück
- 17: Aussparung
- 18: Vorposition

## Patentansprüche

1. Verfahren zum Steuern eines Roboters (10), und insbesondere zum Steuern eines ortsflexiblen Roboters (10), aufweisend:
Automatisches Annähern an zumindest einen Einmesspunkt (17) basierend auf einer Bahnplanung des Roboters (10), und
nach jedem automatischen Annähern:
Manuelles Anfahren des Einmesspunktes (17), und
Erfassen von Koordinaten des manuell angefahrenen Einmesspunktes (17).

2. Verfahren nach Anspruch 1, wobei das manuelle Anfahren ein handgeführtes Bewegen des Roboters (10) und vorzugsweise ein unmittelbares Führen des Roboters (10) von Hand umfasst.

3. Verfahren nach Anspruch 1 oder 2, wobei das manuelle Anfahren einen Betrieb des Roboters (10) in einem Betriebsmodus mit Nachgiebigkeitsregelung umfasst.

4. Verfahren nach einem der vorangegangenen Ansprüche, wobei der Roboter (10) mehrere Achsen umfasst und wobei vorzugsweise Sensoren zur Erfassung der an den Achsen wirkenden Kräfte und/oder Drehmomente vorgesehen sind.

5. Verfahren nach einem der vorangegangenen Ansprüche, wobei das automatische Annähern ein automatisches Annähern des Roboters (10) an den zumindest einen Einmesspunkt (17) ist, und wobei sich vorzugsweise die Position des Roboterfußes (14) in Folge des automatischen Annäherns nicht ändert.

6. Verfahren nach einem der vorangegangenen Ansprüche, wobei das automatische Annähern ein Ansteuern der Roboterkinematik basierend auf der Bahnplanung des Roboters (10) umfasst.

7. Verfahren nach einem der vorangegangenen Ansprüche, wobei sich die Pose des Roboters (10) in Folge des automatischen Annäherns ändert.

8. Verfahren nach einem der vorangegangenen Ansprüche, wobei das automatische Annähern ein automatisches Annähern an zumindest zwei, vorzugsweise an zumindest drei und weiter vorzugsweise an genau drei Einmesspunkten (17) umfasst.

9. Verfahren nach einem der vorangegangenen Ansprüche, weiterhin aufweisend:
Berechnen eines Koordinatensystems und vorzugsweise eines Basis-Koordinatensystems basierend auf den erfassten Koordinaten.

10. Verfahren nach einem der vorangegangenen Ansprüche, wobei kein Suchalgorithmus zum automatischen Anfahren des Einmesspunktes (17) angewendet wird.

11. Verfahren nach einem der vorangegangenen Ansprüche, wobei das Verfahren während dem Ablauf eines Roboterprogramms durchgeführt wird.

12. Verfahren nach einem der vorangegangenen Ansprüche, wobei das automatische Anfahren ein Anfahren des Einmesspunktes (17) bis auf einen räumlichen Abstand von 1 bis 30 cm, vorzugsweise von 1 bis 20 cm, und weiter vorzugsweise von 1 bis 10 cm umfasst.

13. Robotersystem, aufweisend einen Roboter (10), und insbesondere einen mehrachsigen Gelenkarmroboter (10), und eine Robotersteuerung, wobei die Robotersteuerung eingerichtet ist,
- ein automatisches Annähern an zumindest einen Einmesspunkt (17) basierend auf einer Bahnplanung des Roboters (10) durchzuführen, und
- nach jedem automatischen Annähern ein manuelles Anfahren des Einmesspunktes (17) zu erlauben, und
- anschließend die Koordinaten des manuell angefahrenen Einmesspunktes (17) zu erfassen.

14. Robotersystem nach Anspruch 13, wobei der Roboter (10) Sensoren zur Erfassung der an den Achsen wirkenden Kräfte und/oder Drehmomente umfasst.

15. Robotersystem nach Anspruch 13 oder 14, wobei der Roboter (10) und vorzugsweise das Robotersystem ortsflexibel und/oder portabel ist.

16. Verwendung eines Verfahrens zum Steuern eines Roboters (10) nach einem der Ansprüche 1-12 zum Einmessen eines Roboters (10).
